# EUROPÄISCHE PATENTSCHRIFT

(11) **EP 2 154 742 B1**
(45) Veröffentlichungstag und Bekanntmachung des Hinweises auf die Patenterteilung: **26.06.2013**
(21) Anmeldenummer: 09167260.0
(22) Anmeldetag: 05.08.2009
(51) Int. Cl.: H01M 8/02, H01M 8/12

(54) **Brennstoffzelleneinheit und Verfahren zum Herstellen einer elektrisch leitfähigen Verbindung zwischen einer Elektrode und einer Bipolarplatte**
Fuel cell unit and method for producing an electrically conductive connection between an electrode and a bipolar plate
Unité de cellule combustible et procédé de fabrication d'une liaison conductrice électrique entre une électrode et une plaque bipolaire

(30) Priorität: 07.08.2008 DE 102008036847
(43) Veröffentlichungstag der Anmeldung: 17.02.2010
(73) Patentinhaber: ElringKlinger AG, 72581 Dettingen (DE)
(72) Erfinder: Maier, Uwe, 72760, Reutlingen (DE); Kiefer, Thomas, 72574, Bad Urach (DE); Zimmer, Andreas, 72555, Metzingen (DE)
(74) Vertreter: Boehme, Ulrich

(56) Entgegenhaltungen:
- WO-A-01/04981
- WO-A-01/13450
- WO-A-2005/027246
- CA-A1- 2 669 526
- DE-A1- 19 836 352
- DE-A1-102006 056 251

## Beschreibung

Die vorliegende Erfindung betrifft eine Brennstoffzelleneinheit, welche eine Kathoden-Elektrolyt-Anoden-Einheit und mindestens eine Bipolarplatte, die mit einer Elektrode der Kathoden-Elektrolyt-Anoden-Einheit elektrisch leitfähig verbunden ist, umfasst.

Da eine Brennstoffzelleneinheit nur eine geringe Einzelzellspannung von ungefähr 0,4 V bis ungefähr 1,2 V (je nach Last) aufweist, ist eine Reihenschaltung von mehreren elektrochemischen Zellen in einem Brennstoffzellenstack erforderlich, wodurch die Ausgangsspannung in einen aus anwendungstechnischer Sicht interessanten Bereich skaliert wird. Hierfür werden die einzelnen elektrochemischen Zellen mittels sogenannter Bipolarplatten (auch als Interkonnektoren bezeichnet) verbunden.

Eine solche Bipolarplatte muss die folgenden Anforderungen erfüllen:
- Verteilung der Medien (Brenngas und/oder Oxidationsmittel).
- Ausreichende elektrische Leitfähigkeit, da innerhalb des Brennstoffzellenstacks die an der Wasserstoffseite (Anode) erzeugten Elektronen durch die Bipolarplatten geleitet werden, um der Luftseite (Kathode) der nächsten elektrochemischen Zelle zur Verfügung zu stehen. Um die elektrischen Verluste hierbei gering zu halten, muss der Werkstoff für die Bipolarplatten eine ausreichend hohe elektrische Leitfähigkeit aufweisen.
- Ausreichende Korrosionsbeständigkeit, da die typischen Betriebsbedingungen einer Brennstoffzelleneinheit (Betriebstemperatur ungefähr 800°C, oxidierende/reduzierende Atmosphäre, feuchte Luft) korrosionsfördernd wirken. Aus diesem Grund werden an die Korrosionsbeständigkeit des Materials der Bipolarplatte hohe Anforderungen gestellt.

Üblicherweise werden Chromoxid bildende Stähle als Material für die Bipolarplatten von Hochtemperatur-Brennstoffzellen eingesetzt. Ein Grund hierfür ist die relativ gute elektrische Leitfähigkeit der selbstbildenden Chromoxidschicht im Vergleich zu den isolierenden Oxidschichten, die von anderen Hochtemperaturstählen bzw. -legierungen ausgebildet werden (z.B. von Aluminiumoxid- oder Siliziumoxidbildnern).

Ein Nachteil der Chromoxidbildner ist hingegen die Verdampfung von flüchtigen Chromspezies unter den Betriebsbedingungen der Brennstoffzelle. Durch diese "Chromverdampfung" kommt es zu einer Vergiftung der Kathode, welche eine Degradation der Zellleistung zur Folge hat.

Es ist bekannt, als Bipolarplatte ein aus einem metallischen Grundmaterial geprägtes Blech einzusetzen, welches beispielsweise ein Wellenprofil oder ein Noppenprofil aufweist. Dabei gewährleisten die "Täler" des Profils eine ausreichende Gasversorgung der Kathoden-Elektrolyt-Anoden-Einheit (mit Oxidationsmittel bzw. mit Brenngas). Die zwischen den Tälern liegenden "Spitzen" des Kontaktfeldes der Bipolarplatte kontaktieren die Kathoden-Elektrolyt-Anoden-Einheit. Um die elektrischen Übergangswiderstände zu reduzieren, wird anodenseitig ein Nickelnetz oder eine Nickelpaste verwendet. Das Nickelnetz bzw. die Nickelpaste liegen unter den anodenseitigen Betriebsbedingungen (Temperatur von 600 bis 900°C, Sauerstoffpartialdruck von 10⁻¹⁴ bar) in metallischer Form und somit duktil und flexibel vor. Kathodenseitig werden die Spitzen der Bipolarplatte mit einer sogenannten Kathodenkontaktschicht (aus Oxidkeramik) versehen. Diese versintert im Betrieb und bindet die Kathoden-Elektrolyt-Anoden-Einheit an die Bipolarplatte.

Der Prägeprozess, in dem die Bipolarplatte mit einem Wellenprofil oder Noppenprofil versehen wird, ist zwar kostengünstig und für eine Massenproduktion geeignet, lässt aber nur abgerundete Profile der Bipolarplatte zu. Auch nach Auftragen der Kathodenkontaktschicht werden weniger als 20 % der aktiven Zellfläche der Kathoden-Elektrolyt-Anoden-Einheit mit der Bipolarplatte verbunden. Diese 20 % der aktiven Zellfläche werden zudem noch durch Verdichtungsvorgänge bei der Sinterung der Kathodenkontaktschicht um bis zu 50 % verringert, so dass dann nur noch ungefähr 10 % der aktiven Zellfläche in elektrischem Kontakt mit der Bipolarplatte stehen. Dies verringert die Kontaktfläche zwischen der Kathoden-Elektrolyt-Anoden-Einheit einerseits und der Bipolarplatte andererseits und zieht einen erheblichen Leistungsverlust der Brennstoffzelleneinheit nach sich.

Die WO 01/13450 A offenbart eine Brennstoffzelleneinheit gemäß dem Oberbegriff von Anspruch 1.

Die WO 2005/027246 A, die CA-A1-2 669 526, die DE 10 2006 056251 A1, die DE 198 36 352 A1 und die WO 01/04981 A offenbaren weitere Brennstoffzelleneinheiten, die eine Kathoden-Elektrolyt-Anoden-Einheit, eine Bipolarplatte und ein zwischen der Bipolarplatte und einer Elektrode der Kathoden-Elektrolyt-Anoden-Einheit angeordnetes, elektrisch leitfähiges Zwischenelement umfassen.

Der vorliegenden Erfindung liegt die Aufgabe zugrunde, eine Brennstoffzelleneinheit der eingangs genannten Art zu schaffen, welche einen niedrigen Kontaktwiderstand zwischen der Bipolarplatte und einer Elektrode der Kathoden-Elektrolyt-Anoden-Einheit aufweist.

Diese Aufgabe wird durch eine Brennstoffzelleneinheit nach Anspruch 1 gelöst.

Durch das zwischen die Bipolarplatte und die Elektrode der Kathoden-Elektrolyt-Anoden-Einheit geschaltete Zwischenelement wird die für die elektrische Kontaktierung zwischen der Bipolarplatte und der Elektrode zur Verfügung stehende Kontaktfläche vergrößert, was den Kontaktwiderstand absenkt und somit die elektrische Ausgangsleistung der Brennstoffzelle erhöht.

Wegen der durch die Zwischenschaltung des Zwischenelements erhöhten Auflagefläche zwischen Bipolarplatte und Kathoden-Elektrolyt-Anoden-Einheit wird die Kathoden-Elektrolyt-Anoden-Einheit im Falle von auftretenden Biegemomenten (welche insbesondere durch Fertigungstoleranzen bedingt sein können) weniger auf Biegung belastet. Hierdurch ist eine höhere Verspannung des Brennstoffzellenstacks möglich, was mit einer Steigerung der Stackleistung verbunden ist.

Vorzugsweise ist die Kontaktfläche des Zwischenelements, welche der Elektrode der Kathoden-Elektrolyt-Anoden-Einheit gegenübersteht, im Wesentlichen eben ausgebildet, was zu einer besonders großen, für die elektrische Verbindung des Zwischenelements und der Kathoden-Elektrolyt-Anoden-Einheit zur Verfügung stehenden Fläche führt.

Ferner ist es günstig, wenn die Kontaktfläche des Zwischenelements im Wesentlichen parallel zu einer dem Zwischenelement zugewandten Oberfläche der Elektrode ausgerichtet ist. Auf diese Weise ist der Abstand zwischen dem Zwischenelement und der demselben zugewandten Oberfläche der Elektrode überall im Wesentlichen gleich groß.

Durch das Einstellen eines definierten Spalts zwischen dem Zwischenelement und der demselben zugewandten Oberfläche der Elektrode wird die Reproduzierbarkeit des Herstellungsverfahrens der Brennstoffzelleneinheit verbessert.

Bei einer bevorzugten Ausgestaltung der Erfindung ist vorgesehen, dass die mindestens eine Kontaktfläche des Zwischenelements mindestens 25 % der aktiven Fläche der Elektrode überdeckt.

Dabei kann die Kontaktfläche des Zwischenelements zusammenhängend ausgebildet sein oder sich auf mehrere voneinander getrennte Teil-Kontaktflächen aufteilen.

Besonders günstig ist es, wenn die mindestens eine Kontaktfläche des Zwischenelements mindestens 40 % der aktiven Fläche der Elektrode überdeckt.

Bei einer bevorzugten Ausgestaltung der Erfindung ist vorgesehen, dass das Zwischenelement als eine im Wesentlichen ebene Platte mit Ausnehmungen ausgebildet ist. Die Ausnehmungen im Zwischenelement ermöglichen den Durchtritt eines Gases (Oxidationsmittel oder Brenngas) zu der Elektrode.

Wenn das Zwischenelement ohne dazwischenliegende Oxidschicht direkt mit dem Grundmaterial der Bipolarplatte verbunden ist, so bietet dies den Vorteil, dass der Übergangswiderstand zwischen dem Zwischenelement und der Bipolarplatte wegfällt, was den gesamten Kontaktwiderstand zwischen der Bipolarplatte und der Elektrode gegenüber der Verwendung von Zwischenschichten, insbesondere einer Kathodenkontaktschicht, deutlich verringert.

Insbesondere kann die stoffschlüssige Verbindung zwischen dem Zwischenelement und der Bipolarplatte dadurch hergestellt werden, dass das Zwischenelement mit der Bipolarplatte verschweißt und/oder verlötet ist.

Dabei kann das Zwischenelement abschnittsweise mit der Bipolarplatte verschweißt und abschnittsweise mit der Bipolarplatte verlötet sein.

Da bei der Verbindung des Zwischenelements und der Bipolarplatte der Stromfluss nicht über eine zwischen der Zwischenschicht und der Bipolarplatte angeordnete Oxidschicht stattfindet, sondern in den Stahlmaterialien selbst, können auch Stahlmaterialien für die Bipolarplatte eingesetzt werden, welche im Betrieb der Brennstoffzelleneinheit elektrisch isolierende Oxidschichten ausbilden, beispielsweise Aluminiumoxid oder Siliziumoxid bildende Stahlmaterialien.

Aufgrund der stoffschlüssigen Verbindung zwischen dem Zwischenelement und der Bipolarplatte können unterschiedliche Materialien für das Zwischenelement und für die Bipolarplatte verwendet werden.

Um einen ausreichend hohen Stromabgriff von der Elektrode zu erzielen, umfasst das Zwischenelement ein Chromoxid bildendes Stahlmaterial; die im Betrieb der Brennstoffzelleneinheit an der Oberfläche eines Chromoxid bildenden Stahlmaterials gebildete Chromoxidschicht weist nämlich eine relativ hohe elektrische Leitfähigkeit auf.

Auch wenn das Zwischenelement ein Chromoxid bildendes Stahlmaterial (Chromoxid-Bildner) umfasst, kann das Zwischenelement an einer oxidschichtfreien Stelle ohne dazwischenliegende Oxidschicht direkt mit dem Grundmaterial der Bipolarplatte verbunden sein.

Die Bipolarplatte kann hingegen vorzugsweise ein Aluminiumoxid oder Siliziumoxid bildendes Stahlmaterial umfassen, das eine deutlich geringere Chromabdampfung aufweist, welche die Kathode der Kathoden-Elektrolyt-Anoden-Einheit vergiften und somit die Zellleistung verringern könnte.

Die Bipolarplatte weist mindestens eine Durchtrittsöffnung auf, welche durch das mindestens eine Zwischenelement verschlossen ist. Auf diese Weise können insbesondere aus den Kontaktelementen der Bipolarplatte und aus dem Zwischenelement Strukturen mit ungefähr trapezförmigem Querschnitt geschaffen werden, welche eine besonders große, im Wesentlichen parallel zur freien Oberfläche der Elektrode ausgerichtete Kontaktfläche aufweisen, prägetechnisch aber nicht herstellbar sind.

Wenn das Zwischenelement vorteilhafterweise mittels eines metallischen Lots mit der Elektrode verbunden ist, so bietet dies den Vorteil, dass aufgrund der Duktilität des metallischen Lots die Kathoden-Elektrolyt-Anoden-Einheit schwimmend an der Bipolarplatte gelagert ist, wodurch überhöhte lokale mechanische Belastungen (beispielsweise aufgrund der Thermozyklierung des Brennstoffzellenstacks) kompensiert werden können.

Ein das Zwischenelement umrahmendes Fensterblech kann ebenfalls mittels eines metallischen Lotes mit dem Elektrolyten der Kathoden-Elektrolyt-Anoden-Einheit verbunden werden.

Insbesondere kann vorgesehen sein, dass in einem einzigen Lötvorgang gleichzeitig die Kathoden-Elektrolyt-Anoden-Einheit mit dem Fensterblech und auch die Elektrode, insbesondere die Kathode, der Kathoden-Elektrolyt-Anoden-Einheit mit dem Zwischenelement verbunden wird.

Alternativ oder ergänzend zu einer Verbindung des Zwischenelements mit der Elektrode der Kathoden-Elektrolyt-Anoden-Einheit durch ein metallisches Lot kann auch vorgesehen sein, dass das Zwischenelement mittels einer keramischen, bei der Betriebstemperatur der Brennstoffzelleneinheit elektrisch leitfähigen Kontaktschicht mit der Elektrode verbunden ist.

Während des Verlötens des Zwischenelements mit der Elektrode werden das Zwischenelement und die Kathode vorzugsweise unter einem Anpressdruck von mindestens 2 N/cm² gegeneinander gepresst.

Hierdurch kann das Zwischenelement während des Lötprozesses der Kathoden-Elektrolyt-Anoden-Einheit nachgeführt werden, so dass Kontaktverluste durch Verdichtungsvorgänge vermieden werden.

Auch wenn das Zwischenelement mittels einer keramischen Kontaktschicht mit der Elektrode verbunden wird, werden das Zwischenelement und die Kathode während des Sinterprozesses vorzugsweise unter einem Anpressdruck von mindestens 2 N/cm² gegeneinander gepresst, wodurch eine Verringerung der Kontaktfläche zwischen dem Zwischenelement und der Elektrode aufgrund von Verdichtungsvorgängen beim Sintern vermieden wird.

Die dem Zwischenelement gegenüberliegende, elektrisch leitfähig mit dem Zwischenelement verbundene Elektrode ist vorzugsweise die Kathode der Kathoden-Elektrolyt-Anoden-Einheit.

Die vorliegende Erfindung betrifft ferner ein Verfahren zum Herstellen einer elektrisch leitfähigen Verbindung zwischen einer Elektrode einer Kathoden-Elektrolyt-Anoden-Einheit einer Brennstoffzelleneinheit und einer Bipolarplatte.

Der vorliegenden Erfindung liegt die weitere Aufgabe zugrunde, ein solches Verfahren zu schaffen, durch welches ein niedriger Kontaktwiderstand zwischen der Elektrode und der Bipolarplatte erzielt wird.

Diese Aufgabe wird erfindungsgemäß durch ein Verfahren zum Herstellen einer elektrisch leitfähigen Verbindung zwischen einer Elektrode einer Kathoden-Elektrolyt-Anoden-Einheit einer Brennstoffzelleneinheit und einer Bipolarplatte nach Anspruch 13 gelöst.

Die erfindungsgemäße Brennstoffzelleneinheit eignet sich insbesondere zur Verwendung in einer Hochtemperatur-Brennstoffzelle, insbesondere einer SOFC (Solid Oxide Fuel Cell), mit einer Betriebstemperatur von beispielsweise mindestens 600°C.

Weitere Merkmale und Vorteile der Erfindung sind Gegenstand der nachfolgenden Beschreibung und der zeichnerischen Darstellung von Ausführungsbeispielen.

In den Zeichnungen zeigen:
- Fig. 1: einen schematischen Querschnitt durch eine Kathoden-Elektrolyt-Anoden-Einheit einer Brennstoffzelleneinheit und eine elektrisch leitfähig mit der Kathode der Kathoden-Elektrolyt-Anoden-Einheit verbundene Bipolarplatte nach dem Stand der Technik;
- Fig. 2: eine Draufsicht auf die Kathodenseite der Kathoden-Elektrolyt-Anoden-Einheit aus Fig. 1 und ein die Kathoden-Elektrolyt-Anoden-Einheit berandendes Fensterblech;
- Fig. 3: einen schematischen Querschnitt durch eine Kathoden-Elektrolyt-Anoden-Einheit einer Brennstoffzelleneinheit und eine mittels eines Zwischenelements in Form eines Streifenblechs elektrisch leitfähig mit der Kathode der Kathoden-Elektrolyt-Anoden-Einheit verbundene Bipolarplatte;
- Fig. 4: eine schematische Draufsicht auf die Kathodenseite der Kathoden-Elektrolyt-Anoden-Einheit aus Fig. 3 und das an der Kathodenseite angeordnete Zwischenelement in Form eines Streifenblechs;
- Fig. 5: eine schematische Draufsicht auf die Kathodenseite einer Kathoden-Elektrolyt-Anoden-Einheit und ein an der Kathodenseite angeordnetes Zwischenelement in Mäanderform;
- Fig. 6: eine schematische Draufsicht auf die Kathodenseite einer Kathoden-Elektrolyt-Anoden-Einheit und ein an der Kathodenseite angeordnetes Zwischenelement mit einer Vielzahl kreisförmiger Kontaktflächen;
- Fig. 7: einen schematischen Querschnitt durch eine Bipolarplatte mit einer Durchtrittsöffnung und ein die Durchtrittsöffnung verschließendes Zwischenelement, das stoffschlüssig an der Bipolarplatte festgelegt ist, sowie eine dem Zwischenelement gegenüberliegende Kathode.

Gleiche oder funktional äquivalente Elemente sind in allen Figuren mit denselben Bezugszeichen bezeichnet.

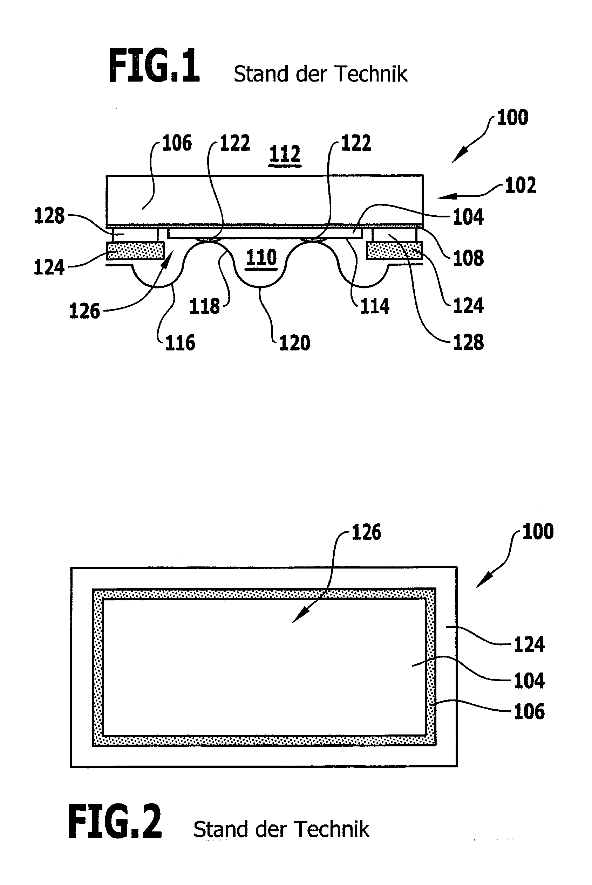

Eine in den Fig. 1 und 2 dargestellte, als Ganzes mit 100 bezeichnete Brennstoffzelleneinheit nach dem Stand der Technik umfasst eine Kathoden-Elektrolyt-Anoden-Einheit (KEA-Einheit) 102, welche ihrerseits eine Kathode 104, eine Anode 106 und einen zwischen der Kathode 104 und der Anode 106 angeordneten Elektrolyten 108 umfasst.

Die Kathode 104 ist aus einem bei der Betriebstemperatur der Brennstoffzelleneinheit 100 (von beispielsweise ungefähr 800°C bis ungefähr 900°C) elektrisch leitfähigen keramischen Material, beispielsweise aus (La_{0,8}Sr_{0,2})_{0,98}MnO₃, gebildet und porös, um einem Oxidationsmittel, beispielsweise Luft oder reinem Sauerstoff, aus einem an die Kathode 104 angrenzenden Oxidationsmittelraum 110 den Durchtritt zu dem Elektrolyten 108 zu ermöglichen.

Der Elektrolyt 108 ist vorzugsweise als Feststoffelektrolyt, insbesondere als Feststoffoxid-Elektrolyt, ausgebildet und besteht beispielsweise aus Yttriumstabilisertem Zirkoniumdioxid.

Der Elektrolyt 108 ist bei Normal- wie bei Betriebstemperatur der Brennstoffzelleneinheit 100 elektronisch nicht leitend. Hingegen nimmt seine ionische Leitfähigkeit mit steigender Temperatur zu.

Die Anode 106 ist aus einem bei der Betriebstemperatur der Brennstoffzelleneinheit 100 elektrisch leitfähigen keramischen Material, beispielsweise aus ZrO₂ oder aus einem Ni/ZrO₂-Cermet (Keramik-Metall-Gemisch), gebildet, welches porös ist, um einem Brenngas aus einem Brenngasraum 112 den Durchtritt durch die Anode 106 zu dem an die Anode 106 angrenzenden Elektrolyten 108 zu ermöglichen.

Wie aus Fig. 1 zu ersehen ist, überdeckt die Kathode 104 eine deutlich kleinere Fläche des Elektrolyten 108 als die Anode 106.

Daher ist im Wesentlichen die gesamte Fläche der Kathode 104 elektrochemisch aktiv, und die aktive Fläche der Kathode 104 entspricht im Wesentlichen der Größe der dem Elektrolyten 108 abgewandten freien Oberfläche 114 der Kathode 104.

Mit der Kathode 104 ist eine Bipolarplatte (auch als Interkonnektor bezeichnet) 116 elektrisch leitfähig verbunden, welche ein mittiges Kontaktfeld mit zu der Kathode 104 hin vorstehenden, beispielsweise noppenförmigen oder wellenbergförmigen Kontaktelementen 118 und zwischen den Kontaktelementen 118 angeordneten Tälern 120 aufweist.

Jedes der Kontaktelemente 118 der Bipolarplatte 116 ist über jeweils eine Kathodenkontaktschicht 122 aus einem bei der Betriebstemperatur der Brennstoffzelleneinheit 100 elektrisch leitfähigen keramischen Material mit der freien Oberfläche 114 der Kathode 104 verbunden.

Wie aus den Fig. 1 und 2 zu ersehen ist, ist das mittige Kontaktfeld der Bipolarplatte 116 von einem im Wesentlichen rechteckigen, rahmenförmigen Fensterblech 124 aus einem metallischen Material umgeben, welches - von der Kathodenseite der KEA-Einheit aus gesehen - den über die Kathode 104 seitlich überstehenden Bereich der Anode 106 abdeckt.

Das Fensterblech 124 weist eine im Wesentlichen rechteckige, mittige Fensteröffnung 126 auf, durch welche sich die Kontaktelemente 118 der Bipolarplatte 116 zu der Kathode 104 hin erstrecken.

Das Fensterblech 124 ist mittels einer Lotschicht 128 aus einem metallischen Lot an dem Elektrolyten 108 der KEA-Einheit 102 festgelegt.

Da die Kontaktelemente 118 der Bipolarplatte 116 durch einen Prägeprozess hergestellt werden und daher ein abgerundetes Profil aufweisen, werden weniger als 20 % der aktiven Fläche der Kathode 104 durch die Kathodenkontaktschichten 122 überdeckt.

Durch Verdichtungsvorgänge beim Sintern der Kathodenkontaktschicht 122 wird die tatsächlich mit der Kathode 104 in Kontakt stehende Fläche der Kathodenkontaktschichten 122 noch um bis zu 50 % verringert. Somit stehen nur noch ungefähr 10 % der aktiven Fläche der Kathode 104 in elektrisch leitendem Kontakt mit der Bipolarplatte 116. Die so verringerte Kontaktfläche zwischen Kathode 104 und Bipolarplatte 116 zieht einen erheblichen Leistungsverlust der Brennstoffzelleneinheit 100 nach sich.

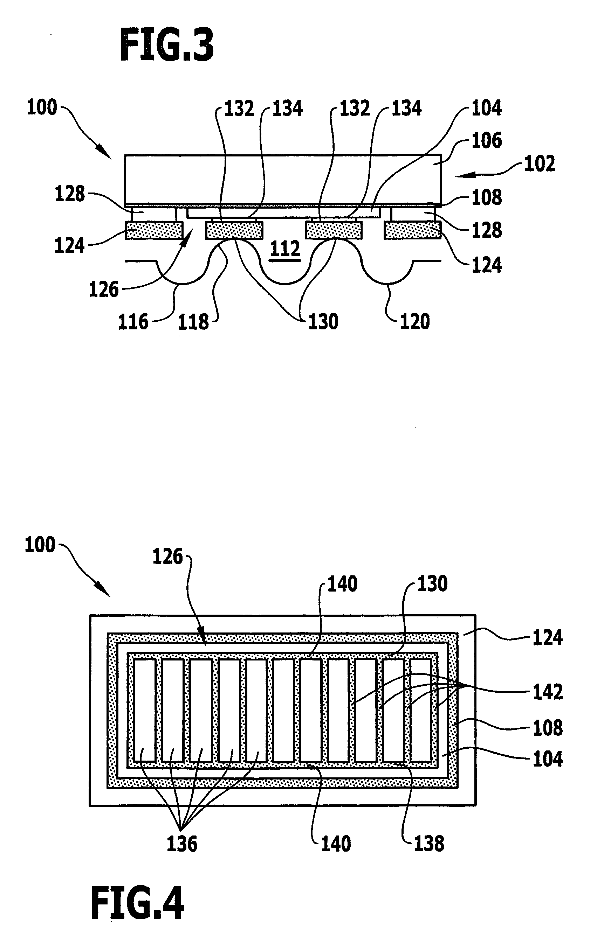

Bei der in den Fig. 3 und 4 dargestellten Ausführungsform einer Brennstoffzelleneinheit 100 wird die Bipolarplatte 116 nicht unmittelbar mit der Kathode 104 verbunden, sondern mittelbar über ein zwischen der Bipolarplatte 116 und der Kathode 104 angeordnetes Zwischenelement 130.

Das Zwischenelement 130 ist aus einem elektrisch leitfähigen, metallischen Material gebildet.

Das Zwischenelement 130 weist eine der Kathode 104 gegenüberliegende, im Wesentlichen ebene und parallel zur freien Oberfläche 114 der Kathode 104 ausgerichtete Kontaktfläche 132 auf, welche über eine zwischen dem Zwischenelement 130 und der Kathode 104 angeordnete Kontaktschicht 134 aus einem bei der Betriebstemperatur der Brennstoffzelleneinheit 100 elektrisch leitfähigen Kontaktmaterial stoffschlüssig mit der Kathode 104 verbunden ist.

Als Kontaktmaterial für die Kontaktschicht 134 kann beispielsweise ein metallisches Lot verwendet werden.

Ein geeignetes metallisches Lotmaterial zur Erzeugung der Kontaktschicht 134 ist beispielsweise ein Silberbasislot, insbesondere das Silberbasislot mit der Bezeichnung Ag4CuO, das von der Firma Innobraze GmbH, Deutschland, unter der Artikelnummer PA 9999999 vertrieben wird, mit der folgenden Zusammensetzung: 96 Mol-% Ag; 4 Mol-% CuO.

Alternativ zur Bildung der Kontaktschicht 134 aus einem metallischen Lot kann als Kontaktmaterial auch ein keramisches Material in Form einer Kontaktpaste verwendet werden.

Eine solche Kontaktpaste zur Bildung der Kontaktschicht 134 enthält beispielsweise 50 Gewichtsprozent eines keramischen Pulvers, 47 Gewichtsprozent Terpineol und 3 Gewichtsprozent Ethylcellulose.

Als keramisches Pulver kann beispielsweise Mn₂O₃ verwendet werden.

Außer Manganoxid kann das keramische Pulver auch Zusätze von Kupferoxid (CuO) und/oder Kobaltoxid (Co₃O₄) enthalten.

Bei Zusatz von Kupferoxid zu Manganoxid beträgt das Mol-Verhältnis von Mangan und Kupfer vorzugsweise Mn/Cu = 2/1. Bei Zusatz von Kobaltoxid zu Manganoxid beträgt das Mol-Verhältnis von Mangan und Kobalt vorzugsweise Mn/Co = 1/2.

Das Kontaktmaterial kann in einem Musterdruckverfahren, beispielsweise in einem Siebdruckverfahren, selektiv auf die Kontaktfläche 132 des Zwischenelements 130 aufgebracht werden.

Dabei erfolgt der Auftrag der Kontaktpaste mittels einer dem Fachmann bekannten Siebdruckanlage, wobei die Maschendichte des Siebes beispielsweise 18 Maschen/cm² und die Maschendicke ungefähr 0,18 mm betragen kann.

Die Kontaktschicht 134 wird vorzugsweise mit einer Nassschichtdicke von ungefähr 100 µm hergestellt.

Das Zwischenelement 130 ist aus einem metallischen Material, vorzugsweise aus einem Stahlmaterial, hergestellt.

Um einen ausreichend hohen Stromabgriff von der Kathode 104 zu haben, wird als Material für das Zwischenelement 130 vorzugsweise ein Chromoxid bildendes Stahlmaterial verwendet.

Als Grundmaterial für das Zwischenelement 130 sind insbesondere die folgenden Chromoxid bildenden Stähle geeignet:
- Der Stahl mit der Bezeichnung Crofer22APU des Herstellers ThyssenKrupp AG, Deutschland, mit der folgenden Zusammensetzung: 22,2 Gewichtsprozent Cr; 0,02 Gewichtsprozent Al; 0,03 Gewichtsprozent Si; 0,46 Gewichtsprozent Mn; 0,06 Gewichtsprozent Ti; 0,002 Gewichtsprozent C; 0,004 Gewichtsprozent N; 0,07 Gewichtsprozent La; 0,02 Gewichtsprozent Ni; Rest Eisen.
   Der Stahl mit der Bezeichnung Crofer22APU hat die Werkstoffbezeichnungen 1.4760 nach EN und S44535 nach UNS.
- Der Stahl mit der Bezeichnung F17TNb des Herstellers Imphy Ugine Precision, Frankreich, mit der folgenden Zusammensetzung: 17,5 Gewichtsprozent Cr; 0,6 Gewichtsprozent Si; 0,24 Gewichtsprozent Mn; 0,14 Gewichtsprozent Ti; 0,17 Gewichtsprozent C; 0,02 Gewichtsprozent N; 0,47 Gewichtsprozent Nb; 0,08 Gewichtsprozent Mo; Rest Eisen.
   Der Stahl mit der Bezeichnung F17TNb hat die Werkstoffbezeichnungen 1.4509 nach EN, 441 nach AISI und S44100 nach UNS.
- Der Stahl mit der Bezeichnung IT-11 des Herstellers Plansee AG, Österreich, mit der folgenden Zusammensetzung: 25,9 Gewichtsprozent Cr; 0,02 Gewichtsprozent Al; 0,01 Gewichtsprozent Si; 0,28 Gewichtsprozent Ti; 0,08 Gewichtsprozent Y; 0,01 Gewichtsprozent C; 0,02 Gewichtsprozent N; 0,01 Gewichtsprozent Mo; 0,16 Gewichtsprozent Ni; Rest Eisen.
- Der Stahl mit der Bezeichnung Ducrolloy (ODS) des Herstellers Plansee AG, Österreich, mit der folgenden Zusammensetzung: 5,5 Gewichtsprozent Fe; 0,48 Gewichtsprozent Y; 0,01 Gewichtsprozent C; 0,01 Gewichtsprozent N; Rest Cr.

Das Zwischenelement 130 ist in Form einer im Wesentlichen ebenen Platte ausgebildet, welche einen im Wesentlichen rechteckige Außenkontur aufweist und mit einer Vielzahl von im Wesentlichen rechteckigen Ausnehmungen 136 versehen ist (siehe insbesondere Fig. 4), so dass das Zwischenelement 130 die Form eines Streifenblechs 138 aufweist, welches aus zwei Längsstreifen 140 und aus einer Vielzahl von die Längsstreifen 140 miteinander verbindenden Querstreifen 142 gebildet ist.

Das Kontaktfeld der Bipolarplatte 116 ist bei dieser Ausführungsform vorzugsweise mit einem Wellenprofil versehen, wobei die parallel zu den Längsstreifen 140 des Zwischenelements 130 verlaufenden Wellenberge die Kontaktelemente 118 der Bipolarplatte 116 bilden.

Durch die zwischen den Querstreifen 142 vorgesehenen Ausnehmungen 136 kann im Betrieb der Brennstoffzelleneinheit 100 Oxidationsmittel aus dem zwischen den Kontaktelementen 118 der Bipolarplatte 116 ausgebildeten Brenngasraum 112 zu der Kathode 104 gelangen.

Auf seiner der Kathode 104 und den Kontaktschichten 134 abgewandten Seite ist das Zwischenelement 130 stoffschlüssig mit der Bipolarplatte 116 verbunden, und zwar im Bereich der Kontaktelemente 118 der Bipolarplatte.

Diese stoffschlüssige Verbindung kann insbesondere durch Verschweißung, insbesondere Laserschweißung, und/oder durch Verlötung der Bipolarplatte 116 mit dem Zwischenelement 130 erzeugt werden.

Wie bei der in den Fig. 1 und 2 dargestellten Ausführungsform gemäß dem Stand der Technik umgibt bei der in den Fig. 3 und 4 dargestellten Ausführungsform ein Fensterblech 124 mit einer Fensteröffnung 126 das mittige Kontaktfeld der Bipolarplatte 116 und das zwischen der Bipolarplatte 116 und der Kathode 104 angeordnete Zwischenelement 130.

Wie aus Fig. 3 zu ersehen ist, kann insbesondere vorgesehen sein, dass das Fensterblech 124 und das Zwischenelement 130 im Wesentlichen dieselbe Materialstärke aufweisen.

Ferner ist das Zwischenelement 130 vorzugsweise auf derselben Höhe wie das Fensterblech 124 innerhalb der Fensteröffnung 126 des Fensterblechs 124 angeordnet.

Die stoffschlüssige Verbindung zwischen dem Zwischenelement 130 und der Bipolarplatte 116 wird so erzeugt, dass das metallische Grundmaterial des Zwischenelements 130 direkt, ohne dazwischenliegende Oxidschicht, mit dem metallischen Grundmaterial der Bipolarplatte 116 verbunden ist.

Da auf diese Weise der Kontaktwiderstand zwischen dem Zwischenelement 130 und der Bipolarplatte 116 nicht durch eine an der Bipolarplatte 116 im Betrieb der Brennstoffzelleneinheit 100 ausgebildete Oxidschicht erhöht wird, kann die Bipolarplatte 116 insbesondere aus einem Aluminiumoxid oder Siliziumoxid bildenden Stahlmaterial hergestellt werden, da sich der hohe elektrische Widerstand der an der freien Oberfläche der Bipolarplatte 116 ausgebildeten Schicht aus Aluminiumoxid bzw. Siliziumoxid aufgrund der direkten Verbindung des metallischen Materials der Bipolarplatte 116 mit dem metallischen Material des Zwischenelements 130 nicht störend auswirkt.

Dafür bieten Aluminiumoxid oder Siliziumoxid bildende Stahlmaterialien den Vorteil, dass aus denselben im Betrieb der Brennstoffzelleneinheit 100 keine flüchtigen Chromspezies verdampfen, welche durch eine Kathodenvergiftung eine Degradation der Leistung der Brennstoffzelleneinheit 100 verursachen können.

Als Grundmaterial für die Bipolarplatte 116 ist insbesondere der folgende Aluminiumoxid bildende Stahl geeignet:
Der Stahl mit der Bezeichnung Aluchrom YHf des Herstellers
ThyssenKrupp AG, Deutschland, mit der folgenden Zusammensetzung:
19 Gewichtsprozent Cr; 5,5 Gewichtsprozent Al; weniger als
0,5 Gewichtsprozent Si; weniger als 0,5 Gewichtsprozent Mn; weniger als
0,1 Gewichtsprozent Y; weniger als 0,05 Gewichtsprozent C; weniger als
0,01 Gewichtsprozent N; weniger als 0,3 Gewichtsprozent Ni; weniger als
0,07 Gewichtsprozent Zr; weniger als 0,1 Gewichtsprozent Hf; Rest Eisen.

An einem Blech aus dem Grundmaterial der Bipolarplatte 116 wird ein Warmumformungsprozess durchgeführt, um in dem Kontaktfeld der Bipolarplatte 116 die Kontaktelemente 118 auszubilden, an denen die fertige Bipolarplatte 116 elektrisch leitend mit dem Zwischenelement 130 verbunden wird.

Zur Herstellung einer elektrisch leitfähigen Verbindung zwischen der Kathode 104 der KEA-Einheit 102 und der Bipolarplatte 116 wird wie folgt vorgegangen:

Ein Kontaktmaterial, beispielsweise die vorstehend beschriebene Kontaktpaste, welche ein keramisches Pulver enthält, wird auf die freie Oberfläche 114 der Kathode 104 und/oder auf die Kontaktfläche 132 des Zwischenelements 130 aufgetragen.

Anschließend wird das Zwischenelement 130 gegen die freie Oberfläche 114 der Kathode 104 angelegt, und das Zwischenelement 130 und die Kathode 104 der KEA-Einheit 102 werden unter einem Anpressdruck von mindestens 2 N/cm² gegeneinander gepresst.

Im miteinander verpressten Zustand werden die KEA-Einheit 102 und das Zwischenelement 130 in einem Sinterofen auf eine Sintertemperatur von beispielsweise ungefähr 900°C erwärmt.

Auf dieser Sintertemperatur werden die KEA-Einheit 102 und das Zwischenelement 130 und das dazwischen angeordnete Kontaktmaterial während einer Haltezeit von ungefähr 5 Stunden gehalten, wodurch die Schicht aus dem Kontaktmaterial versintert und daraus die Kontaktschicht 134 gebildet wird.

Die Erwärmung auf die Sintertemperatur kann dabei beispielsweise mit einer Aufheizgeschwindigkeit von 3 K/min erfolgen.

Nach Ablauf der Haltezeit wird die Anordnung aus der KEA-Einheit 102, dem Zwischenelement 130 und der dazwischen angeordneten Kontaktschicht 134 ungeregelt bis auf Umgebungstemperatur abgekühlt.

Anschließend wird das Fensterblech 124 unter Ausbildung einer Lotschicht 128 mit der KEA-Einheit 102 mittels eines metallischen Lotes verlötet.

Schließlich wird die Bipolarplatte 116, in welche die Kontaktelemente 118 eingeprägt sind, an die der Kathode 104 abgewandte freie Oberfläche des Zwischenelements 130 angelegt und stoffschlüssig mit dem Zwischenelement 130 verbunden, beispielsweise durch Verschweißung, insbesondere durch Laserschweißen.

Durch diese stoffschlüssige Verbindung zwischen der Bipolarplatte 116 und dem Zwischenelement 130 entfällt der elektrische Übergangswiderstand zwischen der Bipolarplatte 116 und dem Zwischenelement 130, so dass ein deutlich geringerer Kontaktwiderstand erzielt wird als bei der Verwendung von Zwischenschichten, beispielsweise aus einem keramischen Kontaktmaterial.

Die dem Zwischenelement 130 abgewandte Seite der Bipolarplatte 116 kann direkt oder indirekt (über eine elektrisch leitfähige Kontaktstruktur, beispielsweise ein Kontaktnetz) elektrisch leitfähig mit der Anode 106 einer an die Brennstoffzelleneinheit 100 angrenzenden weiteren Brennstoffzelleneinheit 100 verbunden werden, beispielsweise durch Verlötung oder mittels einer Kontaktschicht aus einem bei der Betriebstemperatur der Brennstoffzelleneinheit 100 elektrisch leitfähigen Kontaktmaterial.

Auf diese Weise kann aus einer Vielzahl von in einer Stapelrichtung aufeinanderfolgenden Brennstoffzelleneinheiten 100 ein Brennstoffzellenstack gebildet werden.

Als Kontaktmaterial für die Bildung der Kontaktschicht 134 zwischen dem Zwischenelement 130 und der Kathode 104 kann statt einer keramischen Kontaktpaste auch ein metallisches Lot der vorstehend beschriebenen Art, beispielsweise das Silberbasislot mit der Bezeichnung Ag4CuO, verwendet werden.

Auch während des Verlötens des Zwischenelements 130 mit der Kathode 104 werden das Zwischenelement 130 und die Kathode 104 unter einem Anpressdruck von mindestens 2 N/cm² gegeneinander gepresst.

Durch das Verpressen von Zwischenelement 130 und Kathode 104, beispielsweise mittels einer auf der KEA-Einheit 102 oder dem Zwischenelement 130 aufliegenden Last, während des stoffschlüssigen Verbindens von Zwischenelement 130 und Kathode 104 kann das Zwischenelement 130 der KEA-Einheit 102 nachgeführt werden, wodurch Kontaktverluste durch Verdichtungsvorgänge während des Sinter- oder Lötvorgangs vermieden werden.

Durch das Einstellen einer definierten Spaltbreite zwischen dem Zwischenelement 130 und der Kathode 104 und somit einer definierten Dicke der Kontaktschicht 134 wird die Reproduzierbarkeit des Herstellungsverfahrens der Brennstoffzelleneinheit 100 verbessert.

Die Verlötung des Fensterblechs 124 mit der KEA-Einheit 102 kann gleichzeitig mit der Verlötung des Zwischenelements 130 mit der Kathode 104 erfolgen.

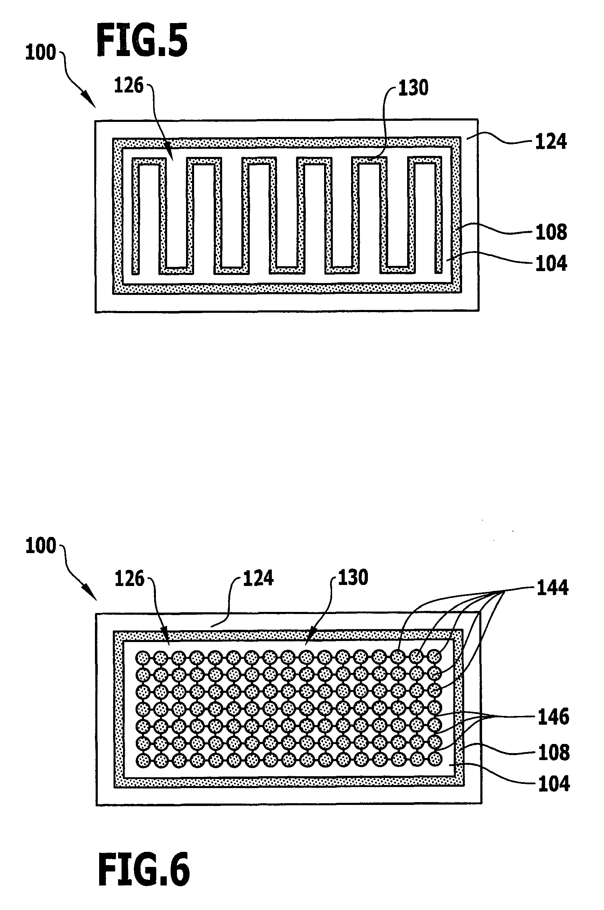

Eine in Fig. 5 dargestellte zweite Ausführungsform einer Brennstoffzelleneinheit 100 unterscheidet sich von der in den Fig. 3 und 4 dargestellten ersten Ausführungsform dadurch, dass das Zwischenelement 130 nicht die Form eines rechteckigen Streifenblechs 138, sondern stattdessen eine Mäanderform aufweist.

Im Übrigen stimmt die in Fig. 5 dargestellte zweite Ausführungsform einer Brennstoffzelleneinheit 100 hinsichtlich Aufbau, Funktion und Herstellungsweise mit der in den Fig. 3 und 4 dargestellten ersten Ausführungsform überein, auf deren vorstehende Beschreibung insoweit Bezug genommen wird.

Eine in Fig. 6 dargestellte dritte Ausführungsform einer Brennstoffzelleneinheit 100 unterscheidet sich von der in den Fig. 3 und 4 dargestellten ersten Ausführungsform dadurch, dass das Zwischenelement 130 nicht als ein Streifenblech ausgebildet ist, sondern eine Vielzahl von im Wesentlichen kreisförmigen

Teil-Kontaktflächen 144 umfasst, wobei einander benachbart angeordnete Teil-Kontaktflächen 144 durch jeweils einen dünnen Steg 146 miteinander verbunden sind.

Jede der Teil-Kontaktflächen 144 des Zwischenelements 130 dieser Ausführungsform ist durch Verschweißung und/oder Verlötung mit jeweils einem der Kontaktelemente 118 der Bipolarplatte 116 stoffschlüssig verbunden.

Das Kontaktfeld der Bipolarplatte 116 ist bei dieser Ausführungsform demnach vorzugsweise mit noppenförmigen Kontaktelementen 118 versehen.

Durch die Zuordnung jeweils einer kreisförmigen Teil-Kontaktfläche 144 des Zwischenelements 130 zu jeweils einem Kontaktelement 118 der Bipolarplatte 116 wird ein besonders niedriger Kontaktwiderstand zwischen der Bipolarplatte 116 und der Kathode 104 erzielt.

Im Übrigen stimmt die in Fig. 6 dargestellte dritte Ausführungsform einer Brennstoffzelleneinheit 100 hinsichtlich Aufbau, Funktion und Herstellungsweise mit der in den Fig. 3 und 4 dargestellten ersten Ausführungsform überein, auf deren vorstehende Beschreibung insoweit Bezug genommen wird.

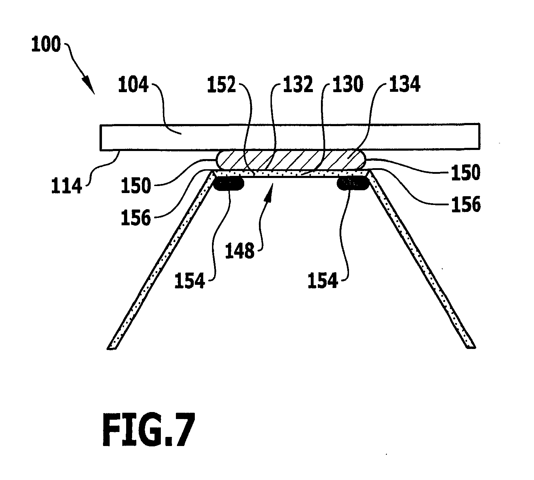

Eine in Fig. 7 dargestellte vierte Ausführungsform einer Brennstoffzelleneinheit 100 unterscheidet sich von den vorstehend beschriebenen Ausführungsformen dadurch, dass das Kontaktfeld der Bipolarplatte 116 nicht geschlossen ausgebildet ist, sondern stattdessen Durchtrittsöffnungen 148 aufweist, von denen in Fig. 7 eine dargestellt ist.

Diese Durchtrittsöffnungen 148 können sich beispielsweise streifenförmig durch das Kontaktfeld der Bipolarplatte 116 erstrecken.

Jede der Durchtrittsöffnungen 148 ist durch jeweils einen an die Form der Durchtrittsöffnung 148 angepassten Abschnitt des Zwischenelements 130, also beispielsweise durch einen streifenförmigen Abschnitt 152 des Zwischenelements 130, verschlossen.

Die Ränder 150 des Abschnitts 152 des Zwischenelements 130 sind durch Schweißnähte 154 mit einem angrenzenden, die Durchtrittsöffnung 148 der Bipolarplatte 116 begrenzenden Rand 156 der Bipolarplatte 116 stoffschlüssig verbunden.

Auf diese Weise ist es möglich, aus den Kontaktelementen 118 der Bipolarplatte 116 und dem Zwischenelement 130 Strukturen mit ungefähr trapezförmigem Querschnitt zu schaffen, die prägetechnisch nicht erzielt werden können.

Dadurch, dass die Abschnitte 152 des Zwischenelements 130 einer solchen im Wesentlichen trapezförmigen Struktur im Wesentlichen parallel zur freien Oberfläche 114 der Kathode 104 ausgerichtet sind, wird eine große Kontaktfläche zwischen der trapezförmigen Struktur einerseits und der Kathode 104 andererseits und somit ein geringer Kontaktwiderstand zwischen der Bipolarplatte 116 und der Kathode 104 erzielt.

Auch bei dieser Ausführungsform ist das Zwischenelement 130 über eine Kontaktschicht 134 aus einem metallischen Lot aus einem bei der Betriebstemperatur der Brennstoffzelleneinheit 100 elektrisch leitfähigen keramischen Kontaktmaterial elektrisch leitfähig mit der Kathode 104 verbunden.

Auch bei der in Fig. 7 dargestellten vierten Ausführungsform ist die Bipolarplatte 116 vorzugsweise aus einem Aluminiumoxid bildenden Stahlmaterial ausgebildet, um eine Chromabdampfung zu verhindern, und das Zwischenelement 130 vorzugsweise aus einem Chromoxid bildenden Stahlmaterial ausgebildet, um (aufgrund der relativ hohen elektrischen Leitfähigkeit des an der

Oberfläche des Zwischenelements 130 ausgebildeten Chromoxidschicht) einen geringen elektrischen Übergangswiderstand zwischen dem Zwischenelement 130 und der Kontaktschicht 134 zu erzielen.

Im Übrigen stimmt die in Fig. 7 dargestellte vierte Ausführungsform einer Brennstoffzelleneinheit 100 hinsichtlich Aufbau, Funktion und Herstellungsweise mit den in den Fig. 2 bis 6 dargestellten ersten bis dritten Ausführungsformen überein, auf deren vorstehende Beschreibung insoweit Bezug genommen wird.

## Patentansprüche

1. Brennstoffzelleneinheit (100), umfassend eine Kathoden-Elektrolyt-Anoden-Einheit (102) und mindestens eine Bipolarplatte (116), die mit einer Elektrode der Kathoden-Elektrolyt-Anoden-Einheit (102) elektrisch leitfähig verbunden ist,
wobei die Brennstoffzelleneinheit (100) mindestens ein zwischen der Bipolarplatte (116) und der Elektrode angeordnetes, elektrisch leitfähiges Zwischenelement (130) umfasst, das mindestens eine der Elektrode gegenüberstehende Kontaktfläche (132) aufweist,
**dadurch gekennzeichnet,**
**dass** das Zwischenelement (130) ein Chromoxid bildendes Stahlmaterial umfasst und
**dass** die Bipolarplatte (116) mindestens eine Durchtrittsöffnung (148) aufweist, welche durch das mindestens eine Zwischenelement (130) verschlossen ist.

2. Brennstoffzelleneinheit nach Anspruch 1, **dadurch gekennzeichnet, dass** die Kontaktfläche (132) des Zwischenelements (130) im Wesentlichen eben ausgebildet ist.

3. Brennstoffzelleneinheit nach einem der Ansprüche 1 oder 2, **dadurch gekennzeichnet, dass** die Kontaktfläche (132) des Zwischenelements (130) im Wesentlichen parallel zu einer dem Zwischenelement (130) zugewandten Oberfläche (114) der Elektrode ausgerichtet ist.

4. Brennstoffzelleneinheit nach einem der Ansprüche 1 bis 3, **dadurch gekennzeichnet, dass** die mindestens eine Kontaktfläche (132) des Zwischenelements (130) mindestens 25 % der aktiven Fläche der Elektrode überdeckt.

5. Brennstoffzelleneinheit nach Anspruch 4, **dadurch gekennzeichnet, dass** die mindestens eine Kontaktfläche (132) des Zwischenelements (130) mindestens 40 % der aktiven Fläche der Elektrode überdeckt.

6. Brennstoffzelleneinheit nach einem der Ansprüche 1 bis 5, **dadurch gekennzeichnet, dass** das Zwischenelement (130) als eine im Wesentlichen ebene Platte mit Ausnehmungen (136) ausgebildet ist.

7. Brennstoffzelleneinheit nach einem der Ansprüche 1 bis 6, **dadurch gekennzeichnet, dass** das Zwischenelement (130) mit der Bipolarplatte (116) verbunden ist,
wobei keine Oxidschicht zwischen dem Zwischenelement (130) und der Bipolarplatte (116) angeordnet ist.

8. Brennstoffzelleneinheit nach einem der Ansprüche 1 bis 7, **dadurch gekennzeichnet, dass** das Zwischenelement (130) mit der Bipolarplatte verschweißt und/oder verlötet ist.

9. Brennstoffzelleneinheit nach einem der Ansprüche 1 bis 8, **dadurch gekennzeichnet, dass** die Bipolarplatte (116) ein Aluminiumoxid oder Siliziumoxid bildendes Stahlmaterial umfasst.

10. Brennstoffzelleneinheit nach einem der Ansprüche 1 bis 9, **dadurch gekennzeichnet, dass** das Zwischenelement (130) mittels eines metallischen Lots mit der Elektrode verbunden ist.

11. Brennstoffzelleneinheit nach einem der Ansprüche 1 bis 10, **dadurch gekennzeichnet, dass** das Zwischenelement (130) mittels einer keramischen, bei der Betriebstemperatur der Brennstoffzelleneinheit (100) elektrisch leitfähigen Kontaktschicht (134) mit der Elektrode verbunden ist.

12. Brennstoffzelleneinheit nach einem der Ansprüche 1 bis 11, **dadurch gekennzeichnet, dass** die dem Zwischenelement (130) gegenüberliegende Elektrode die Kathode (104) der Kathoden-Elektrolyt-Anoden-Einheit (102) ist.

13. Verfahren zum Herstellen einer elektrisch leitfähigen Verbindung zwischen einer Elektrode einer Kathoden-Elektrolyt-Anoden-Einheit (102) einer Brennstoffzelleneinheit (100) und einer Bipolarplatte (116), umfassend folgende Verfahrensschritte:
- stoffschlüssiges Verbinden eines elektrisch leitfähigen Zwischenelements (130), das mindestens eine der Elektrode gegenüberstehende Kontaktfläche (132) aufweist und ein Chromoxid bildendes Stahlmaterial umfasst, mit der Elektrode;
- stoffschlüssiges Verbinden des Zwischenelements (130) mit der Bipolarplatte (116), wobei die Bipolarplatte (116) mindestens eine Durchtrittsöffnung (148) aufweist, welche durch das Zwischenelement (130) verschlossen ist.

## Claims

1. A fuel cell unit (100), including a cathode-electrolyte-anode unit (102) and at least one bipolar plate (116) which is electrically conductively connected to an electrode of the cathode-electrolyte-anode unit (102),
wherein the fuel cell unit (100) includes at least one electrically conductive intermediate element (130) which is arranged between the bipolar plate (116) and the electrode and has at least one contact face (132) facing the electrode,
**characterised in that**
the intermediate element (130) includes a steel material that forms chromium oxide, and **in that**
the bipolar plate (116) has at least one passage opening (148) which is closed off by the at least one intermediate element (130).

2. A fuel cell unit according to Claim 1, **characterised in that** the contact face (132) of the intermediate element (130) is of substantially planar construction.

3. A fuel cell unit according to either of Claims 1 and 2, **characterised in that** the contact face (132) of the intermediate element (130) is aligned to be substantially parallel to a surface (114) of the electrode that faces the intermediate element (130).

4. A fuel cell unit according to one of Claims 1 to 3, **characterised in that** the at least one contact face (132) of the intermediate element (130) covers at least 25% of the active face of the electrode.

5. A fuel cell unit according to Claim 4, **characterised in that** the at least one contact face (132) of the intermediate element (130) covers at least 40% of the active face of the electrode.

6. A fuel cell unit according to one of Claims 1 to 5, **characterised in that** the intermediate element (130) is constructed as a substantially planar plate having cutouts (136).

7. A fuel cell unit according to one of Claims 1 to 6, **characterised in that** the intermediate element (130) is connected to the bipolar plate (116),
wherein there is no oxide layer arranged between the intermediate element (130) and the bipolar plate (116).

8. A fuel cell unit according to one of Claims 1 to 7, **characterised in that** the intermediate element (130) is welded and/or brazed to the bipolar plate.

9. A fuel cell unit according to one of Claims 1 to 8, **characterised in that** the bipolar plate (116) includes a steel material that forms aluminium oxide or silicon oxide.

10. A fuel cell unit according to one of Claims 1 to 9, **characterised in that** the intermediate element (130) is connected to the electrode by means of a metallic braze.

11. A fuel cell unit according to one of Claims 1 to 10, **characterised in that** the intermediate element (130) is connected to the electrode by means of a ceramic contact layer (134) that is electrically conductive at the operating temperature of the fuel cell unit (100).

12. A fuel cell unit according to one of Claims 1 to 11, **characterised in that** the electrode opposite the intermediate element (130) is the cathode (104) of the cathode-electrolyte-anode unit (102).

13. A method for producing an electrically conductive connection between an electrode of a cathode-electrolyte-anode unit (102) of a fuel cell unit (100) and a bipolar plate (116), including the following method steps:
- making a material-uniting connection between an electrically conductive intermediate element (130), which includes at least one contact face (132) facing the electrode and a steel material that forms chromium oxide, and the electrode;
- making a material-uniting connection between the intermediate element (130) and the bipolar plate (116), wherein the bipolar plate (116) has at least one passage opening (148) that is closed off by the intermediate element (130).

## Revendications

1. Unité de cellule combustible (100) comprenant une unité de cathode, d'électrolyte et d'anode (102) et au moins une plaque bipolaire (116) qui est reliée de manière électroconductrice à une électrode de l'unité de cathode, d'électrolyte et d'anode (102),
l'unité de cellule combustible (100) comportant au moins un élément intermédiaire (130) électro-conducteur, disposé entre la plaque bipolaire (116) et l'électrode, qui présente au moins une surface de contact (132) opposée à l'électrode,
**caractérisée en ce que**
l'élément intermédiaire (130) comporte un matériau à base d'acier formant de l'oxyde de chrome et
la plaque bipolaire (116) présente au moins une ouverture de passage (148) qui est fermée par l'au moins un élément intermédiaire (130).

2. Unité de cellule combustible selon la revendication 1, **caractérisée en ce que** la surface de contact (132) de l'élément intermédiaire (130) est réalisée essentiellement plane.

3. Unité de cellule combustible selon l'une quelconque des revendications 1 ou 2, **caractérisée en ce que** la surface de contact (132) de l'élément intermédiaire (130) est orientée essentiellement parallèlement à une surface (114) de l'électrode, la surface (114) étant tournée vers l'élément intermédiaire (130).

4. Unité de cellule combustible selon l'une quelconque des revendications 1 à 3, **caractérisée en ce que** l'au moins une surface de contact (132) de l'élément intermédiaire (130) recouvre au moins 25 % de la surface active de l'électrode.

5. Unité de cellule combustible selon la revendication 4, **caractérisée en ce que** l'au moins une surface de contact (132) de l'élément intermédiaire (130) recouvre au moins 40 % de la surface active de l'électrode.

6. Unité de cellule combustible selon l'une quelconque des revendications 1 à 5, **caractérisée en ce que** l'élément intermédiaire (130) est réalisé comme une plaque essentiellement plane avec des évidements (136).

7. Unité de cellule combustible selon l'une quelconque des revendications 1 à 6, **caractérisée en ce que** l'élément intermédiaire (130) est relié à la plaque bipolaire (116), aucune couche d'oxyde étant disposée entre l'élément intermédiaire (130) et la plaque bipolaire (116).

8. Unité de cellule combustible selon l'une quelconque des revendications 1 à 7, **caractérisée en ce que** l'élément intermédiaire (130) est soudé et/ou brasé avec la plaque bipolaire.

9. Unité de cellule combustible selon l'une quelconque des revendications 1 à 8, **caractérisée en ce que** la plaque bipolaire (116) comporte un matériau à base d'acier formant de l'oxyde d'aluminium ou de l'oxyde de silicium.

10. Unité de cellule combustible selon l'une quelconque des revendications 1 à 9, **caractérisée en ce que** l'élément intermédiaire (130) est relié par une brasure métallique à l'électrode.

11. Unité de cellule combustible selon l'une quelconque des revendications 1 à 10, **caractérisée en ce que** l'élément intermédiaire (130) est relié à l'électrode à l'aide d'une couche de contact (134) céramique, électroconductrice à la température de service de l'unité de cellule combustible (100).

12. Unité de cellule combustible selon l'une quelconque des revendications 1 à 11, **caractérisée en ce que** l'électrode opposée à l'élément intermédiaire (130) est la cathode (104) de l'unité de cathode, d'électrolyte et d'anode (102).

13. Procédé de fabrication d'une liaison électroconductrice entre une électrode d'une unité de cathode, d'électrolyte et d'anode (102) d'une unité de cellule combustible (100) et une plaque bipolaire (116), comprenant les étapes de procédé suivantes :
- liaison de matière d'un élément intermédiaire électro-conducteur (130) qui présente au moins une surface de contact (132) opposée à l'électrode et un matériau à base d'acier formant de l'oxyde de chrome, avec l'électrode ;
- liaison de matière de l'élément intermédiaire (130) avec la plaque bipolaire (116), la plaque bipolaire (116) présentant au moins une ouverture de passage (148) qui est fermée par l'élément intermédiaire (130).
